# FASCICULE DE BREVET EUROPEEN

(11) **EP 3 910 185 B1**
(45) Date de publication et mention de la délivrance du brevet: **01.07.2026**
(21) Numéro de dépôt: 21171770.7
(22) Date de dépôt: 03.05.2021
(51) Int. Cl.: F02D 41/38, F02D 41/12, F02P 5/15, F02D 41/00, F02P 5/04

(54) **PROCÉDÉ DE CONTRÔLE D'UN MOTEUR À COMBUSTION INTERNE ASSOCIÉ À UN RAIL COMMUN D'INJECTION**
VERFAHREN ZUR STEUERUNG EINES VERBRENNUNGSMOTORS, DER MIT EINER GEMEINSAMEN EINSPRITZSCHIENE VERBUNDEN IST
METHOD FOR CONTROLLING AN INTERNAL COMBUSTION ENGINE ASSOCIATED WITH A COMMON RAIL INJECTION

(30) Priorité: 14.05.2020 FR 2004792
(43) Date de publication de la demande: 17.11.2021
(73) Titulaire: Horse Powertrain Solutions, S.L.U., 28108 Alcobendas, Madrid (ES)
(72) Inventeur: Pereira, Luc, 18320 Cours Des Barres (FR); GUEROUT, Romain, 94350 VILLIERS SUR MARNE (FR)
(74) Mandataire: Elzaburu S.L.P.

(56) Documents cités:
- FR-A1- 3 027 064
- FR-A1- 3 072 418
- JP-B2- 3 632 097
- US-A- 5 941 211
- US-A1- 2005 252 491
- US-B2- 6 792 912

## Description

La présente demande concerne un procédé de contrôle d'un moteur à combustion interne associé à un rail commun d'injection dans au moins un cylindre du moteur, notamment lorsque ledit moteur est monté sur un véhicule automobile.

De plus en plus, les moteurs à combustion interne équipant les véhicules automobiles ont recours à l'injection directe de carburant à haute pression. Il en résulte notamment la réduction des émissions de particules fines par le moteur. A cet égard, des injecteurs sont alimentés en carburant à partir d'une rampe commune ou rail commun à haute pression grâce à une pompe à haute pression. Les injecteurs injectent ensuite le carburant reçu directement dans les cylindres du moteur.

De manière générale, la quantité de carburant injectée est une fonction de l'écart de pression aux bornes de l'injecteur et de la durée de l'ouverture des injecteurs. Les injecteurs ayant un temps minimum d'ouverture, sous forte pression, ce temps minimum correspond à une quantité d'injection minimale.

De tels injecteurs peuvent ne pas apporter pleine satisfaction au cours d'une phase de lever de pied du véhicule. Une phase de lever de pied correspond une phase dans laquelle un conducteur du véhicule sur lequel le moteur est monté relâche la pédale d'accélérateur. Ce cas se produit par exemple lors d'une forte descente pour bénéficier du frein moteur.

Au cours d'une phase de lever de pied, la consigne de couple devient généralement nulle. En résultat, le calculateur du moteur coupe l'injection de carburant. Il peut, par exemple, fermer le boîtier papillon du moteur de manière à diminuer le débit d'air entrant dans le moteur et maximiser le frein moteur.

Dans la plupart des véhicules automobiles, le moteur est en général découplé du véhicule lui-même pour éviter les remontées de chocs du groupe motopropulseur vers le véhicule et pour filtrer les vibrations du groupe motopropulseur, notamment vers l'habitacle. Par exemple, le moteur est mécaniquement lié au véhicule par un ensemble de liaisons élastiques. En particulier, les moteurs disposent généralement d'une liberté de rotation autour d'un axe transversal du véhicule. Lors d'une accélération du véhicule, le moteur pivote autour de cet axe transversal jusqu'à une butée arrière. Lors d'une décélération, le moteur pivote dans l'autre sens et se rapproche d'une butée avant.

Lors d'un lever de pied, l'émission d'une consigne de couple nulle a pour conséquence que le moteur vient brutalement en butée avant, ce qui se traduit par un risque de casse des éléments de liaison entre le moteur et le véhicule et par un désagrément pour les occupants du véhicule.

Pour pallier cet inconvénient, il a été proposé de paramétrer le calculateur pour que celui-ci ne traduise pas immédiatement l'enfoncement nul de la pédale d'accélérateur en une consigne de couple nulle. Par exemple, le calculateur fait passer la consigne de couple d'une valeur initiale qui correspond un enfoncement initial de la pédale d'accélérateur à une valeur de couple intermédiaire faible mais non nulle pendant une durée prédéterminée qui permet que le mouvement de rotation du moteur vers la butée avant se fasse sans heurt. Lorsque ce mouvement est terminé, le calculateur applique une consigne de couple finale.

Une telle solution n'apporte toutefois pas pleine satisfaction. En effet, pendant la phase dans laquelle la consigne de couple prend la valeur intermédiaire faible mais non nulle, la pression régnant dans le rail d'injection de carburant est encore extrêmement élevée. Même en paramétrant le temps d'ouverture des injecteurs à sa valeur minimale, la quantité de carburant qui pourrait être obtenue (i.e. : le débit de carburant minimum) est généralement beaucoup plus importante que celle qui serait juste nécessaire à la production du couple correspondant à la consigne intermédiaire. Le document JP 3 632097 B2 décrit un procédé dans lequel la pression régnant dans un rail d'injection est réduite pendant une phase de décélération.

L'invention a pour but de remédier à ces inconvénients.

Plus particulièrement, l'invention a pour but de proposer un procédé de contrôle du moteur permettant de maîtriser le couple produit par le moteur lors de l'application d'une consigne de couple intermédiaire au début d'une phase de lever de pied.

A cet effet, il est proposé un procédé de contrôle d'un moteur à combustion interne associé à un rail commun d'injection dans au moins un cylindre du moteur, ledit moteur étant monté sur un véhicule automobile, ledit procédé étant mis en œuvre lorsqu'un conducteur du véhicule relâche une pédale d'accélérateur du véhicule, et comprenant des étapes successives au cours desquelles on constate que la pédale d'accélérateur est relâchée, on applique une consigne de couple intermédiaire pendant une première durée prédéterminée, puis on applique une consigne de couple finale.

Selon une de ses caractéristiques générales, ce procédé comporte, successivement :
- une première étape débutant au début de la première durée prédéterminée et au cours de laquelle on diminue la pression de rail commun d'injection jusqu'à une valeur intermédiaire,
- une deuxième étape au cours de laquelle on maintient la pression de rail commun d'injection à la valeur intermédiaire, et
- une troisième étape, débutant à la fin de la première durée prédéterminée, au cours de laquelle on coupe l'injection dans les cylindres.

En diminuant ainsi la pression de rail commun d'injection, on fait en sorte que, lors de l'application de consigne de couple intermédiaire, la pression de rail commun d'injection soit suffisamment basse pour que, en tenant compte de la durée minimum d'ouverture des injecteurs, ceux-ci puissent fournir le débit de carburant juste nécessaire pour produire le couple minimum.

De préférence, au cours de la première étape, le débit d'air du moteur est réglé sur une valeur correspondant à la production du couple intermédiaire pour une quantité de carburant qui serait ajustée en réponse à une régulation de richesse en boucle fermée autour d'une consigne de richesse optimale.

Avantageusement, la première étape dure une deuxième durée prédéterminée, ladite deuxième durée prédéterminée étant strictement inférieure à la première durée prédéterminée.

Avantageusement, lors de la première étape, une pompe du rail commun d'injection est arrêtée et la richesse est augmentée par rapport à la richesse avant que l'on constate que la pédale d'accélérateur est relâchée.

En augmentant la richesse de la sorte, on augmente le débit de fuite des injecteurs de sorte à faire descendre la pression de rail commun d'injection sur seulement quelques points morts hauts du moteur.

Dans un mode de mise en œuvre, lors de la première étape, la richesse est égale à la richesse avant que l'on constate que la pédale d'accélérateur est relâchée multipliée par un coefficient supérieur ou égal à 1,5.

On peut en outre prévoir que, au cours de la première étape, le temps d'ouverture d'injecteur du rail commun d'injection est égal à un temps d'ouverture prédéterminé.

Un tel réglage permet d'ajuster la richesse en boucle ouverte, ce qui augmente la rapidité du réglage et diminue la longueur de la première étape.

Dans un mode de réalisation, le moteur est à allumage commandé et, au cours de la première étape, l'avance à l'allumage est réduite.

On diminue de la sorte le couple produit par le mélange au cours de la première étape.

On peut également prévoir que le moteur soit associé à un circuit de recirculation des gaz d'échappement et que, au cours de la première étape, le taux de recirculation des gaz d'échappement soit augmenté.

En augmentant ainsi le taux de recirculation, on détourne le plus possible de gaz d'échappement chargés de carburant de la ligne d'échappement en les recyclant à l'admission, afin de faire revenir la plus grande part possible de carburant à l'admission pour les cycles de combustion suivants.

Dans un mode de mise en œuvre, au cours de la deuxième étape, le temps d'ouverture d'injecteur du rail commun d'injection est calculé comme la somme d'un temps de prépositionnement et d'un temps correctif, le temps de prépositionnement étant déterminé en tenant compte d'une quantité de carburant recyclée à l'échappement pendant la première étape, le temps correctif étant déterminé en tenant compte de l'écart de boucle de richesse en boucle fermée.

On accélère ainsi, après la première étape où le temps d'ouverture d'injection aura été exceptionnellement long, la régulation de la richesse en boucle fermée.

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] représente schématiquement un moteur à combustion interne,
[Fig 2] représente schématiquement un circuit d'injection dans les cylindres du moteur de la figure 1,
[Fig 3] représente schématiquement un procédé de contrôle du moteur de la figure 1, et
[Fig 4] est un graphe illustrant la pression de rail commun d'injection, la consigne de couple, la richesse et le taux de recirculation des gaz d'échappement du moteur de la figure 1 au cours du procédé de la figure 3.

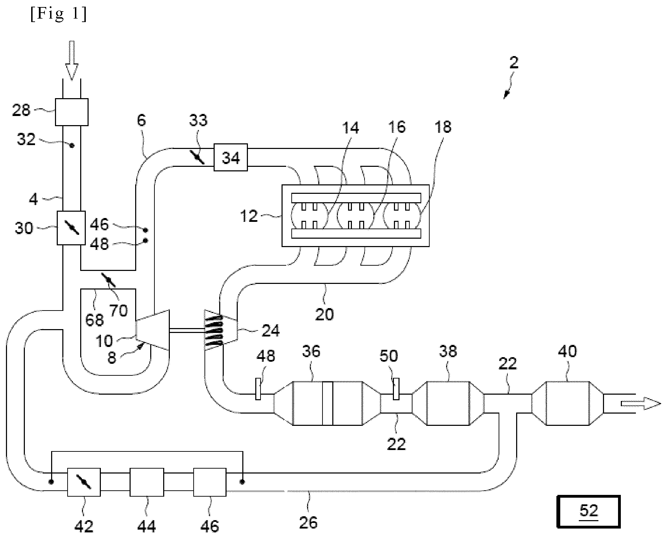

En référence à la figure 1, on a schématiquement représenté un moteur à combustion interne 2 selon un aspect de la présente invention. Le moteur 2 est un moteur à allumage commandé, à essence, à injection directe à haute pression, suralimenté et permettant une recirculation partielle des gaz d'échappement à basse pression. Le moteur 2 est destiné à être incorporé dans un véhicule automobile.

Le moteur 2 comprend un conduit d'admission basse pression 4, un conduit d'admission haute pression 6, et un turbocompresseur 8 comprenant un compresseur 10 situé entre les conduits 4 et 6.

Le moteur 2 comporte un bloc moteur, ou carter-cylindres 12. En l'espèce, le carter-cylindres 12 comprend trois cylindres 14, 16 et 18.

Le moteur 2 comporte un conduit d'échappement à haute pression 20 et un conduit d'échappement à basse pression 22 situé en aval du conduit d'échappement à haute pression 20. Le turbocompresseur 8 comprend une turbine 24 disposée entre les conduits 20 et 22.

Le moteur 2 comporte un circuit ou conduit de recirculation 26 des gaz d'échappement également connu sous la dénomination anglo-saxonne « exhaust gas recirculation » ou sous l'acronyme correspondant « EGR ». Le conduit 26 raccorde les conduits 4 et 22. En d'autres termes, le conduit 26 forme un circuit EGR à basse pression. On ne sort toutefois pas du cadre de l'invention en envisageant un circuit EGR à haute pression.

Le moteur 2 comporte un filtre à air 28 et une vanne d'admission 30 disposés sur le conduit 4. La vanne 30 permet de fermer partiellement l'admission du moteur 2 pour créer une dépression en aval de la vanne 30, afin d'aspirer des gaz d'échappement via le conduit de recirculation 26. Le conduit 4 comporte un débitmètre 32 permettant de mesurer le débit massique d'air admis à travers la vanne 30.

Le moteur 2 comporte une vanne de réglage des gaz d'admission 33, également connu sous la dénomination de boîtier-papillon, et un refroidisseur des gaz d'admission suralimentés 34 disposés sur le conduit 6. Les gaz issus du conduit 6 sont mélangés au carburant et produisent le couple dans les cylindres 14, 16 et 18 avant d'être évacués dans le conduit d'échappement 20. Les gaz entraînent ensuite la turbine 24.

Dans l'exemple illustré, le turbocompresseur 8 et doté d'une turbine 24 à géométrie variable, également connue sous la dénomination anglo-saxonne « variable nozzle turbine » ou sous l'acronyme correspondant « VNT ». Une telle turbine est dotée d'ailettes inclinables pour pouvoir ajuster l'énergie de détente prélevée sur les gaz d'échappement. Bien entendu, on peut sans sortir du cadre de l'invention envisager d'utiliser un turbocompresseur avec une turbine à géométrie fixe, éventuellement associée à un circuit de dérivation des gaz avec une vanne de réglage du débit, également connu sous la dénomination anglo-saxonne « Waste Gate ».

Le moteur 2 comporte un catalyseur trois voies 36, un filtre à particules 38 et un catalyseur trois voies 40 disposés sur le conduit 22.

Le catalyseur 36 est ici un catalyseur chauffé électriquement, également connu sous la dénomination anglo-saxonne « Electrically Heated Catalyst » ou sous l'acronyme correspondant « EHT ». Dans l'exemple illustré, le catalyseur 36 est doté de deux pains successifs. Le filtre à particules 38 est également connu sous la dénomination anglo-saxonne « Gasoline particulate filter » ou sous l'acronyme correspondant « GPF ». Le catalyseur 40 est un catalyseur sous plancher du véhicule. En aval du catalyseur 40, les gaz d'échappement peuvent être évacués dans l'atmosphère extérieure.

Le moteur 2 comprend un refroidisseur 44, un filtre 46 et une vanne de réglage des gaz recirculés 42, également connue sous la dénomination « vanne EGR ». Les gaz recyclés sont prélevés en aval du filtre à particules 38 et en amont du catalyseur 40. La vanne 42 permet de régler le débit des gaz recyclés à l'admission. Les gaz recyclés sont filtrés et refroidis par le filtre 46 et le refroidisseur 44 puis sont réintroduits dans le conduit 4 en aval de la vanne 42.

Dans le cas où l'on remplacerait le circuit de recirculation à basse pression par un circuit de recirculation à haute pression, le conduit de recirculation serait raccordé au conduit 20, c'est-à-dire en amont de la turbine 24, et les gaz seraient réintroduits dans le conduit 6, c'est-à-dire en aval du compresseur 10.

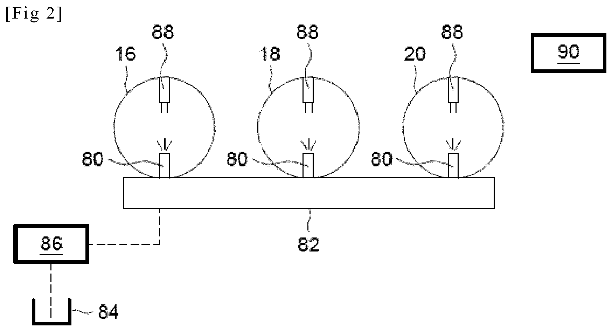

Les cylindres 14, 16 et 18 sont alimentés en carburant chacun par un injecteur de carburant 80 (voir figure 2) monté sur un rail commun 82, également connu sous la dénomination rampe commune ou sous l'appellation anglo-saxonne « common rail ». Le carburant provient d'un circuit de carburant du véhicule qui comprend un réservoir 84 et une pompe à haute pression 86. Les cylindres 14, 16 et 18 comportent aussi une bougie d'allumage 88 et un moyen permettant de régler l'avance à l'allumage 90.

De nouveau en référence à la figure 1, le moteur 2 comprend, sur le conduit 22 en amont du catalyseur 36, une sonde à oxygène amont proportionnelle 48 pour le réglage de la richesse du mélange air carburant en boucle fermée sur une consigne de richesse. Le moteur 2 comprend, sur le conduit 22 et en aval du catalyseur 36, une sonde à oxygène aval binaire 50. La sonde 50 donne une indication de la richesse des gaz en aval du catalyseur 36. Le signal de la sonde aval 50 peut être utilisé, de manière connue en soi, pour corriger la valeur de la consigne de richesse à régler.

Sans sortir du cadre de l'invention, on peut envisager que la quantité d'oxygène dans le catalyseur 36 soit réglée en boucle fermée autour d'une consigne, à la place de la richesse. Cette consigne de quantité d'oxygène peut être une fonction de la capacité de stockage en oxygène du catalyseur 36. On peut alors, par exemple, utiliser des indications de la sonde amont pour la régulation proprement dite et des sondes 48 et 50 pour déterminer la valeur de la capacité de stockage en oxygène du catalyseur 36 et de la consigne qui en dépend.

Le moteur 2 comprend, en outre, un calculateur 52. Le calculateur 52 est doté des moyens matériels et logiciels pour piloter les paramètres d'entrée du moteur 2. En particulier, les paramètres d'entrée comprennent, directement ou indirectement, une consigne de couple délivré par le moteur 2, la pression dans le rail commun 82, la durée d'ouverture des injecteurs 80, le débit de la pompe à haute pression 86, le débit de carburant dans le moteur 2, le débit d'air admis dans les cylindres 16, 18 et 20, l'avance à l'allumage des bougies 88, l'ouverture de la vanne de recirculation 42.

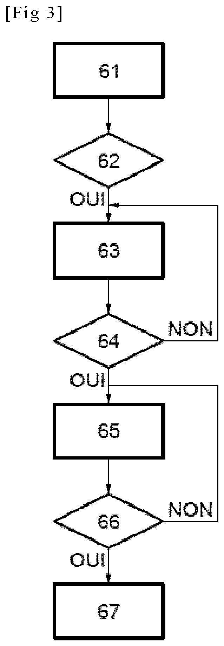

En référence à la figure 3, on a schématiquement représenté un procédé de contrôle du moteur 2 selon l'invention.

Le procédé comprend une première étape d'initialisation 61 pouvant être mise en œuvre de manière périodique, par exemple toutes les demi-secondes lorsque le moteur 2 est en fonctionnement.

Le procédé comprend une étape de test 62 au cours de laquelle on détermine si un conducteur du véhicule dans lequel est monté le moteur 2 vient de relâcher la pédale d'accélérateur du véhicule. En d'autres termes, au cours de l'étape 62, on détermine si la pédale d'accélérateur du véhicule est passée, au cours de la demi-seconde précédente, d'un état au moins partiellement enfoncé à un état relâché.

Si, au cours de l'étape 62, aucune phase de lever de pied n'est détectée, alors la réponse est « Non » et il est mis fin au procédé. Si, au cours de l'étape 62, le conducteur du véhicule initie une phase de lever de pied, alors la réponse à l'étape 62 devient « Oui » et on applique une étape 63.

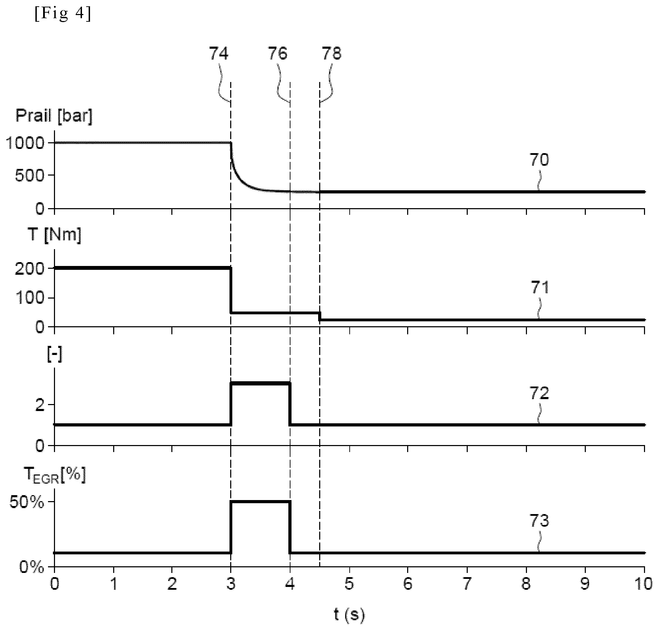

En référence à la figure 4, on a schématiquement représenté quatre courbes illustrant différents paramètres du moteur 2 lors de la mise en œuvre du procédé de la figure 3. Plus particulièrement, la figure 4 contient une courbe 70 représentant la pression Prail du carburant dans le rail commun 82, une courbe 71 représentant la consigne de couple délivrée par le calculateur 52 du moteur 2, une courbe 72 représentant la richesse dans les cylindres 14, 16 et 18, une courbe 73 représentant graphiquement le taux de recirculation des gaz d'échappement.

Sur la figure 4, on a représenté par une ligne pointillée 74 l'instant auquel la réponse à l'étape 62 devient « Oui ». Comme cela est visible sur la figure 4, avant détection de l'initialisation d'une phase de lever de pied, la pression Prail est sensiblement constante égale à 1000 bars, la consigne de couple est sensiblement constante égale à 200 Newton mètres, la richesse du moteur est sensiblement constante égale à 1 et le taux de recirculation est sensiblement constant égal à 6 %.

Au cours de l'étape 63, à l'instant schématisé par la ligne 74, le calculateur 52 :
- modifie la consigne de couple, en l'espèce en appliquant une consigne constante égale à 50 Newton mètres,
- arrête la pompe à haute pression 86,
- modifie le réglage du rail commun d'injection 82 pour augmenter la richesse dans les cylindres 14, 16 et 18, en l'espèce, en augmentant la richesse à la valeur 3,
- ajuste la vanne 33 de sorte à régler le débit d'air sur une valeur correspondant à la production du couple de consigne pour une quantité de carburant qui serait déjà ajustée en réponse à une régulation de richesse en boucle fermée autour d'une consigne de richesse optimale, par exemple égale à 1,
- pilote la vanne 42 de manière à augmenter le taux de recirculation à 50 %, et
- réduit l'avance à l'allumage, par exemple en réglant l'avance à l'allumage au niveau d'une limite de stabilité de la combustion.

En référence à la figure 4, on voit que la consigne de couple chute brutalement de 200 Newton mètres à 50 Newton mètres. En réponse, on injecte une quantité d'essence importante qui correspond un débit de fuite élevée des injecteurs. En l'espèce, la quantité d'essence est injectée en boucle ouverte par un réglage de la durée d'injection. Dans le même temps, concernant l'ajustement de la vanne 33, le calculateur 52 calcule le débit d'air qui conviendrait si le débit de carburant correspondait au couple de consigne de 50 Newton mètres avec une richesse égale à 1.

Grâce au débit de fuite élevé des injecteurs et à l'arrêt de la pompe à haute pression, la pression Prail descend considérablement en quelques points morts hauts de fonctionnement du moteur 2. Comme cela est visible sur la figure 4, la pression Prail passe 2000 bars à 250 bars en moins d'une seconde. Alors, la durée d'injection minimale des injecteurs 80 correspond à un débit de carburant faible.

Au cours de l'étape 63, la réduction de l'avance à l'allumage permet de diminuer le couple produit par le mélange.

Au cours de l'étape 63, le carburant excédentaire non brûlé provenant des surinjections est évacué à l'échappement et traverse en totalité le catalyseur 36 et le filtre à particules 38, qui traitent une partie de ce carburant non brûlé en le combinant à de l'oxygène présent en leur sein. Cela est possible pour autant que la quantité d'oxygène présente n'est pas nulle. Généralement, cette quantité n'est pas nulle lorsque ces composants fonctionnent en boucle fermée et que l'injection de carburant est coupée.

Plus en aval, la fraction du carburant non brûlé qui n'est pas recyclée à l'admission traverse le catalyseur 40, qui peut aussi traiter cette partie du carburant en la combinant à de l'oxygène.

Grâce au réglage à une valeur particulièrement élevée du taux de recirculation, on détourne le plus possible des gaz d'échappement chargés de carburant en les recyclant à l'admission, ce qui permet de faire revenir la plus grande part possible de ce carburant pour les combustions des cycles de combustion suivants.

A la suite de l'étape 63, on applique une étape de test 64 au cours de laquelle on détermine si la pression Prail est inférieure ou égale à une valeur intermédiaire, en l'espèce 250 bars. Tant que la réponse à l'étape 64 est « Non », on continue d'appliquer l'étape 63. Dès que la réponse à l'étape 64 devient « Oui », on applique une étape 65.

Sans sortir du cadre de l'invention, on peut envisager de remplacer l'étape 64 par une étape au cours de laquelle on détermine si le temps écoulé depuis le passage de l'étape 62 à l'étape 63 dépasse un seuil de durée prédéterminé. Ce seuil peut être déterminé par des essais sur banc.

En référence à la figure 4, l'instant auquel la réponse à l'étape 64 devient « Oui » est schématiquement représenté par une ligne pointillée 76. A cet instant, la consigne de couple est toujours égale à la valeur intermédiaire 50 Newton mètres.

Au cours de l'étape 65, le calculateur 52 modifie le réglage de la richesse en reprenant un réglage en boucle fermée autour d'une consigne, en l'espèce égale à 1. Pour ce faire, le calculateur 52 ajuste la durée d'ouverture des injecteurs 80, ce qui modifie la durée d'injection du carburant et modifie donc le débit de carburant, comme lors de l'étape 61. Dans le même temps, le taux de recirculation est réglé à nouveau sur une valeur stabilisée, en l'espèce 10 %, comme lors de l'étape 61.

En référence à la figure 4, juste après l'instant schématisé par la ligne pointillée 76, la courbe 72 devient constante égale à 1 et la courbe 73 devient constante égale à 10 %. De ce fait, la pression Prail est maintenue égale à 250 bars.

Dans l'exemple illustré, pour accélérer la régulation de la richesse en boucle fermée lors de l'étape 65, la durée d'ouverture des injecteurs 80 se présente sous la forme d'une durée de prépositionnement t_{prépo} et d'une durée corrective t_{correc} dépendant de l'écart de boucle de richesse ε. L'écart ε est l'écart entre la richesse mesurée et la consigne. La durée t_{prépo} tient compte des quantités de carburant recyclées à l'échappement pendant l'étape 63. Par exemple, lors de la mise au point, on peut déterminer par une baie d'analyse la quantité de carburant présente dans les gaz de combustion en amont du catalyseur 40. La durée t_{prépo} correspond à la quantité de carburant injectée pour obtenir une richesse égale à 1 compte tenu du débit d'air. Par exemple, la durée t_{prépo} correspond à une quantité de 1 g de carburant pour 14,7 g d'air environ, diminuée de la quantité de carburant déjà amenée par les gaz recirculés.

Le procédé comprend une étape de test 66 au cours de laquelle on détermine si le temps qui s'est écoulé depuis le passage de l'étape 62 à l'étape 63 dépasse une durée prédéterminée, en l'espèce 1,6 secondes. Tant que la réponse à l'étape 66 est « Non », on continue d'appliquer l'étape 65. Dès que la réponse à l'étape 66 devient « Oui », on applique une étape 67. L'instant auquel la réponse à l'étape 66 devient « Oui » est schématiquement représenté sur la figure 4 par une ligne pointillée 78.

Au cours de l'étape 67, la consigne de couple devient nulle. Au même moment, on coupe l'injection de carburant et on ferme la vanne d'admission 30. On maintient la position de la vanne de recirculation 42.

Au vu de ce qui précède, l'invention permet de contrôler efficacement la quantité de carburant minimale pouvant être injectée au début de la phase de lever de pied, de manière à pouvoir maîtriser le couple fourni par le moteur au début de cette phase.

## Revendications

1. Procédé de contrôle d'un moteur à combustion interne (2) associé à un rail commun d'injection (82) dans au moins un cylindre (16, 18, 20) du moteur, ledit moteur (2) étant monté sur un véhicule automobile, ledit procédé étant mis en œuvre lorsqu'un conducteur du véhicule relâche une pédale d'accélérateur du véhicule, et comprenant des étapes successives au cours desquelles on constate (61) que la pédale d'accélérateur est relâchée, on applique (63) une consigne de couple intermédiaire pendant une première durée prédéterminée, puis on applique (67) une consigne de couple finale, **caractérisé en ce qu'**il comporte, successivement :
- une première étape (63) débutant au début de la première durée prédéterminée et au cours de laquelle on diminue la pression (Prail) de rail commun d'injection (82) jusqu'à une valeur intermédiaire,
- une deuxième étape (65) au cours de laquelle on maintient la pression (Prail) de rail commun d'injection (82) à la valeur intermédiaire, et
- une troisième étape (67), débutant à la fin de la première durée prédéterminée, au cours de laquelle on coupe l'injection dans les cylindres (16, 18, 20).

2. Procédé selon la revendication 1, dans lequel, au cours de la première étape (63), le débit d'air du moteur (2) est réglé sur une valeur correspondant à la production du couple intermédiaire pour une quantité de carburant qui serait ajustée en réponse à une régulation de richesse en boucle fermée autour d'une consigne de richesse optimale.

3. Procédé selon la revendication 1 ou 2, dans lequel la première étape (63) dure une deuxième durée prédéterminée, ladite deuxième durée prédéterminée étant strictement inférieure à la première durée prédéterminée.

4. Procédé selon l'une quelconque des revendications 1 à 3, dans lequel, lors de la première étape (63), une pompe (86) du rail commun d'injection (82) est arrêtée et la richesse est augmentée par rapport à la richesse avant que l'on constate que la pédale d'accélérateur est relâchée.

5. Procédé selon la revendication 4, dans lequel, lors de la première étape (63), la richesse est égale à la richesse avant que l'on constate que la pédale d'accélérateur est relâchée multipliée par un coefficient supérieur ou égal à 1,5.

6. Procédé selon la revendication 4 ou 5, dans lequel, au cours de la première étape (63), le temps d'ouverture d'injecteur du rail commun d'injection (82) est égal à un temps d'ouverture prédéterminé.

7. Procédé selon l'une quelconque des revendications 1 à 6, dans lequel le moteur (2) est à allumage commandé et dans lequel, au cours de la première étape (63), l'avance à l'allumage est réduite.

8. Procédé selon l'une quelconque des revendications 1 à 7, dans lequel le moteur (2) est associé à un circuit de recirculation partielle des gaz d'échappement (26) à l'admission du moteur et dans lequel, au cours de la première étape (63), le taux de recirculation des gaz d'échappement est augmenté.

9. Procédé selon l'une quelconque des revendications 1 à 8, dans lequel le moteur (2) est associé à un circuit de recirculation partielle des gaz d'échappement (26) à l'admission du moteur et dans lequel, au cours de la deuxième étape (65), le temps d'ouverture d'injecteur du rail commun d'injection (82) est calculé comme la somme d'un temps de prépositionnement et d'un temps correctif, le temps de prépositionnement étant déterminé en tenant compte d'une quantité de carburant recyclée à l'échappement pendant la première étape (63), le temps correctif étant déterminé en tenant compte de l'écart de boucle de richesse en boucle fermée.

## Patentansprüche

1. Verfahren zur Steuerung eines Verbrennungsmotors (2), der mit einer gemeinsamen Einspritzschiene (82) in mindestens einem Zylinder (16, 18, 20) des Motors verbunden ist, wobei der Motor (2) in einem Kraftfahrzeug montiert ist, wobei das Verfahren ausgeführt wird, wenn ein Fahrer des Fahrzeugs das Gaspedal loslässt, umfassend aufeinanderfolgende Schritte, in denen festgestellt wird (61), dass das Gaspedal losgelassen wurde, ein Zwischendrehmomentbefehl (63) für eine erste vorbestimmte Dauer angelegt wird und anschließend ein endgültiger Drehmomentbefehl (67) angelegt wird, **dadurch gekennzeichnet, dass** es nacheinander Folgendes umfasst:
ein erster Schritt (63), der mit Beginn der ersten vorbestimmten Dauer einsetzt und in dem der Druck (Prail) der gemeinsamen Einspritzschiene (82) auf einen Zwischenwert reduziert wird,
ein zweiter Schritt (65), in dem der Druck (Prail) der gemeinsamen Einspritzschiene (82) auf dem Zwischenwert gehalten wird, und
ein dritter Schritt (67), der am Ende der ersten vorbestimmten Dauer beginnt, während der die Einspritzung in die Zylinder (16, 18, 20) unterbrochen wird.

2. Verfahren nach Anspruch 1, wobei im ersten Schritt (63) der Luftstrom des Motors (2) auf einen Wert eingestellt wird, der der Erzeugung des mittleren Drehmoments für eine Kraftstoffmenge entspricht, die als Reaktion auf eine Gemischverhältnisregelung im geschlossenen Regelkreis um einen optimalen Sollwert des Gemischverhältnisses angepasst wird.

3. Verfahren nach Anspruch 1 oder 2, wobei der erste Schritt (63) eine zweite vorbestimmte Dauer hat, wobei die zweite vorbestimmte Dauer strikt kürzer ist als die erste vorbestimmte Dauer.

4. Verfahren nach einem der Ansprüche 1 bis 3, wobei im ersten Schritt (63) eine Pumpe (86) der gemeinsamen Einspritzschiene (82) gestoppt und das Gemischverhältnis im Vergleich zum Gemischverhältnis angereichert wird, bevor bemerkt wird, dass das Gaspedal losgelassen wird.

5. Verfahren nach Anspruch 4, wobei im ersten Schritt (63) das Gemischverhältnis gleich dem Gemischverhältnis ist, bevor festgestellt wird, dass das Gaspedal losgelassen ist, multipliziert mit einem Koeffizienten größer oder gleich 1,5.

6. Verfahren nach Anspruch 4 oder 5, wobei im ersten Schritt (63) die Öffnungszeit der gemeinsamen Einspritzschiene (82) gleich einer vorbestimmten Öffnungszeit ist.

7. Verfahren nach einem der Ansprüche 1 bis 6, wobei der Motor (2) fremdgezündet ist und wobei während des ersten Schritts (63) der Zündzeitpunkt zurückgenommen wird.

8. Verfahren nach einem der Ansprüche 1 bis 7, wobei der Motor (2) mit einem System zur teilweisen Abgasrückführung (26) zur Ansaugung des Motors verbunden ist und wobei während des ersten Schritts (63) die Abgasrückführungsrate erhöht wird.

9. Verfahren nach einem der Ansprüche 1 bis 8, wobei der Motor (2) mit einem System zur teilweisen Abgasrückführung (26) zur Ansaugung des Motors verbunden ist und wobei während des zweiten Schritts (65) die Öffnungszeit der gemeinsamen Einspritzschiene (82) als Summe einer Vorpositionierungszeit und einer Korrekturzeit berechnet wird, wobei die Vorpositionierungszeit unter Berücksichtigung einer im ersten Schritt (63) in den Abgasstrom zurückgeführten Kraftstoffmenge bestimmt wird, wobei die Korrekturzeit unter Berücksichtigung der Abweichung des Gemischverhältnisses im geschlossenen Regelkreis bestimmt wird.

## Claims

1. A method for controlling an internal combustion engine (2) associated with a common rail injection system (82) in at least one cylinder (16, 18, 20) of the engine, said engine (2) being mounted on a motor vehicle, said method being implemented when a driver of the vehicle releases the accelerator pedal of the vehicle, and comprising successive steps during which it is determined (61) that the accelerator pedal is released, an intermediate torque command is applied (63) for a first predetermined duration, and then a final torque command is applied (67), **characterized in that** it comprises, successively:
- a first step (63) beginning at the start of the first predetermined duration and during which the common rail injection pressure (Prail) (82) is reduced to an intermediate value,
- a second step (65) during which the common rail injection pressure (Prail) (82) is maintained at the intermediate value, and
- a third stage (67), beginning at the end of the first predetermined duration, during which the injection into the cylinders (16, 18, 20) is cut off.

2. The method according to claim 1, in which, during the first step (63), the air flow rate of the engine (2) is set to a value corresponding to the production of intermediate torque for a quantity of fuel that would be adjusted in response to closed-loop richness control around an optimal richness setpoint.

3. The method according to claim 1 or 2, in which the first step (63) lasts for a second predetermined duration, said second predetermined duration being strictly less than the first predetermined duration.

4. The method according to any of claims 1 to 3, in which, in the first step (63), a pump (86) of the common rail injection (82) is stopped, and the richness is increased relative to the richness before it is observed that the accelerator pedal is released.

5. The method according to claim 4, in which, at the first step (63), the richness is equal to the richness before it is observed that the accelerator pedal is released, multiplied by a coefficient greater than or equal to 1.5.

6. The method according to claim 4 or 5, in which, during the first step (63), the opening time of the common rail injector (82) is equal to a predetermined opening time.

7. The method according to any of claims 1 to 6, in which the engine (2) is spark-ignited and in which, during the first stage (63), the ignition advance is reduced.

8. The method according to any of claims 1 to 7, in which the engine (2) is associated with a partial exhaust gas recirculation circuit (26) at the engine intake and in which, during the first stage (63), the exhaust gas recirculation rate is increased.

9. The method according to any of claims 1 to 8, in which the engine (2) is associated with a partial exhaust gas recirculation circuit (26) at the engine intake and in which, during the second stage (65), the common rail injector opening time (82) is calculated as the sum of a pre-positioning time and a correction time, the pre-positioning time being determined by taking into account an amount of fuel recycled to the exhaust during the first stage (63), the correction time being determined taking into account the closed-loop richness loop deviation.
